(19) Europäisches Patentamt
European Patent Office
Office européen des brevets

(11) **EP 2 504 252 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(21) Anmeldenummer: **10768924.2**

(22) Anmeldetag: **19.10.2010**

(51) Int Cl.:
**B65D 77/22** *(2006.01)*

(86) Internationale Anmeldenummer:
**PCT/EP2010/065685**

(87) Internationale Veröffentlichungsnummer:
**WO 2011/064051 (03.06.2011 Gazette 2011/22)**

(54) **ÜBERDRUCKVENTIL FÜR EINEN VERPACKUNGSBEHÄLTER**

PRESSURE RELIEF VALVE FOR A PACKAGING CONTAINER

VALVE DE SURPRESSION POUR UN RÉCIPIENT D'EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2009 DE 102009047170**

(43) Veröffentlichungstag der Anmeldung:
**03.10.2012 Patentblatt 2012/40**

(73) Patentinhaber: **Robert Bosch GmbH
70442 Stuttgart (DE)**

(72) Erfinder:
• **STOTKIEWITZ, Herbert
74321 Bietigheim-Bissingen (DE)**
• **HAAK, Juergen
NL-6000 AA Weert (NL)**

(56) Entgegenhaltungen:
**EP-A1- 0 499 783     EP-B1- 0 760 790
DE-A1- 4 435 492     DE-A1-102006 016 594**

EP 2 504 252 B1

## Beschreibung

Stand der Technik

Die vorliegende Erfindung betrifft ein Überdruckventil für einen Verpackungsbehälter.

Sauerstoffempfindliche Güter, wie beispielsweise Kaffee, werden zur Vermeidung eines Verderbens durch Sauerstoff in dicht verschlossenen Verpackungsbehältern verpackt. Da aber frisch gerösteter Kaffee Kohlendioxid erzeugt, würde sich ein erhöhter, die Packung aufblähender und zum Platzen bringender Druck aufbauen. Daher ist es bekannt, Verpackungsbehälter mit Überdruckventilen zu versehen. Aus der EP 0 760 790 B1 ist beispielsweise ein Überdruckventil bekannt, welches eine Basisplatte mit einer Ventilöffnung und eine darüberliegende Membran aufweist und den Gegenstand des Oberbegriffes des Anspruches 1 beschreibt. Die Ventilöffnung ist dabei aus zwei sich schneidenden, kreisförmigen Öffnungen, ausgebildet. Dieses Überdruckventil hat sich grundsätzlich bewährt, weist jedoch relativ große Abmessungen auf. Daher müssen die bekannten Überdruckventile fast immer auf einer Vorderseite angeordnet werden. Derartige Vorderseiten sind jedoch als Präsentationsflächen gefragt, so dass sich durch eine Anbringung des Überdruckventils an der Vorderseite unerwünschte Einschränkungen, z.B. hinsichtlich der Bedruckung der Verpackung ergeben. Ferner ist das bekannte Überdruckventil relativ aufwändig in der Herstellung, da zur Fixierung der Membran die Basisplatte teilweise mit Klebstoff benetzt werden muss und die Membran dann auf die Basisplatte aufgeklebt wird. Hierbei kann es schnell zu einer Faltenbildung kommen, wodurch das Überdruckventil nicht mehr dicht ist.

Ferner offenbart die DE 4435492 A1 ein Überdruckventil für Verpackungsbehälter mit den Merkmalen des Oberbegriffes des Anspruches 1.

Vorteile der Erfindung

Das erfindungsgemäße Überdruckventil mit den Merkmalen des Anspruchs 1 weist demgegenüber den Vorteil auf, dass es sehr einfach und kostengünstig herstellbar ist und insbesondere mit reduzierten Abmessungen hergestellt werden kann. Hierdurch ergibt sich neben einer wünschenswerten Materialeinsparung insbesondere auch der große Vorteil, dass das erfindungsgemäße Überdruckventil an beliebigen Positionen am Verpackungsbehälter angeordnet werden kann. Beispielsweise kann das erfindungsgemäße Überdruckventil nun auch auf Schmal- oder Rückseiten oder an einer Längsnaht der Verpackung angeordnet werden. Dies wird erfindungsgemäß dadurch erreicht, dass das Überdruckventil eine Basisplatte mit einer Ventilöffnung, eine Membran und eine Zwischenlage aufweist. Die Membran umfasst eine Seite, an welcher vollständig eine Klebstoffbeschichtung aufgebracht ist und die Zwischenlage ist mittels der Klebstoffbeschichtung auf die Membran aufgeklebt, derart, dass die Membran zwei parallele Randzonen zur Befestigung an der Basisplatte aufweist. Mit anderen Worten dient die Klebstoffbeschichtung der Membran einerseits zur Fixierung der Zwischenlage und andererseits zur Fixierung der Membran auf der Basisplatte. Dabei wird die Membran mit der Zwischenlage derart auf die Basisplatte aufgeklebt, dass eine Kanalzone, welche bei einem Überdruck im Inneren des Verpackungsbehälters einen Auslasskanal durch die Ventilöffnung bereitstellt, gebildet ist und in der Schließlage die Membran auf der Basisplatte dicht aufliegt. Dabei weist die Zwischenlage eine größere Dicke als die Membran auf. Hierdurch kann eine versteifende Wirkung der Zwischenlage auf die Membran erreicht werden. Somit kann erfindungsgemäß die Membran einfach auf einer Seite vollständig mit einem Klebstoff beschichtet werden und durch die dann darauf aufgeklebte Zwischenlage ein Kleben der Membran auf der Basisplatte verhindert werden. Ferner lässt sich dadurch ein einfacher, modularer Aufbau erhalten, da durch ein einfaches Variieren der Dicke der Zwischenlage ein Öffnungsdruck, bei dem das Überdruckventil öffnet, eingestellt werden kann. Hierdurch müssen keine weiteren Abmessungen des Überdruckventils geändert werden, sondern lediglich eine andere Zwischenlage mit unterschiedlicher Dicke aufgeklebt werden.

Die Unteransprüche zeigen bevorzugte Weiterbildungen der Erfindung.

Besonders bevorzugt ist die Zwischenlage mittig auf die Membran aufgeklebt. Dadurch ergibt sich ein symmetrischer Aufbau und eine gleichmäßige Öffnungscharakteristik des Überdruckventils sowie zwei gleich große Randzonen zur Befestigung an der Basisplatte.

Weiter bevorzugt ist ein Verhältnis einer Fläche der Zwischenlage zu einer Fläche der Ventilöffnung derart gewählt, dass die Gleichung $3 \leq V \leq 4$ erfüllt ist, wobei V bevorzugt ca. 3,5 ist. Durch Einstellung dieses Maßes hat sich überraschenderweise gezeigt, dass unabhängig von einer absoluten Größe der Ventilöffnung bzw. der Kanalzone hervorragende Abdichtungs- und Öffnungseigenschaften des Überdruckventils bereitgestellt werden können.

Durch Einhaltung dieser Abmessungen der Flächen der Kanalzone zur Fläche der Ventilöffnung kann bei jedem Druckbereich ein sicheres Öffnen des Überdruckventils sichergestellt werden. Ferner wurde überraschend festgestellt, dass bei Einhaltung dieser Abmessungen auch eine signifikante Reduzierung der Abmessungen des Überdruckventils möglich ist. Die Einhaltung dieser Abmessungen stellt ferner sicher, dass günstige Hebelverhältnisse zwischen der Membran und der Ventilöffnung erreicht werden, wodurch ferner auch die Vakuumfestigkeit erhöht wird. Hierdurch wird es erstmals möglich, dass das erfindungsgemäße Überdruckventil auch die Anforderungen der Dosenindustrie für Dosen erfüllt. Hierbei können Öffnungsdrücke bis zu 120 mbar und Schließdrücke bis über 50 mbar erreicht werden.

Besonders bevorzugt weist die Ventilöffnung in der Basisplatte eine Fläche auf, welche kleiner als 30 mm² ist und vorzugsweise kleiner als 25 mm² ist. Dies stellt eine sehr kleine Gesamtabmessung des Überdruckventils sicher.

Vorzugsweise weist die Basisplatte eine Fläche auf, welche kleiner als 250 mm², vorzugsweise kleiner als 160 mm² ist. Dadurch kann sichergestellt werden, dass das Überdruckventil an beliebigen Positionen des Verpackungsbehälters befestigbar ist.

Besonders bevorzugt ist die Ventilöffnung durch zwei sich schneidende Kreisflächen, vorzugsweise mit gleichem Radius, gebildet. Hierdurch wird ein einfacher geometrischer Aufbau erreicht, wobei sich an der Ventilöffnung zwei nach innen gerichtete Lochspitzen ergeben.

Weiter bevorzugt ist eine Längserstreckung der Ventilöffnung gleich der Hälfte einer Länge der Basisplatte. Hierdurch können die Öffnungseigenschaften des Überdruckventils noch weiter verbessert werden.

Gemäß einer weiteren bevorzugten Ausgestaltung der Erfindung ist die Ventilöffnung durch drei oder vier oder sechs sich schneidende Kreisflächen gebildet. Hierbei ergeben sich bei drei sich schneidenden Kreisflächen drei Lochspitzen, bei vier sich schneidenden Kreisflächen vier Lochspitzen und bei sechs sich schneidenden Kreisflächen sechs Lochspitzen. Vorzugsweise sind die sich schneidenden Kreisflächen derart angeordnet, dass sich symmetrische Formen ergeben.

Eine besonders gute Öffnungscharakteristik ergibt sich, wenn die Lochspitzen vorzugsweise eine Dreieckform aufweisen.

Weiter bevorzugt umfasst das Überdruckventil einen Abstandshalter, welcher sicherstellt, dass die Membran bei einem Überdruck im Verpackungsbehälter sich wölben kann und der Überdruck so aus dem Verpackungsbehälter ausgelassen werden kann.

Zeichnung

Nachfolgend werden bevorzugte Ausführungsbeispiele der Erfindung unter Bezugnahme auf die begleitende Zeichnung im Detail beschrieben. In der Zeichnung ist:

Figur 1    eine schematische, perspektivische Ansicht eines Verpackungsbehälters mit einem Überdruckventil gemäß einem ersten Ausführungsbeispiel der Erfindung,

Figur 2    eine Explosionsdarstellung des Überdruckventils des ersten Ausführungsbeispiels,

Figur 3    eine Draufsicht des Überdruckventils des ersten Ausführungsbeispiels,

Figur 4    eine Draufsicht auf ein Überdruckventil gemäß einem zweiten Ausführungsbeispiel der Erfindung,

Figur 5    eine Draufsicht auf ein Überdruckventil gemäß einem dritten Ausführungsbeispiel der Erfindung,

Figur 6    eine Draufsicht auf ein Überdruckventil gemäß einem vierten Ausführungsbeispiel der Erfindung, und

Figur 7    eine Draufsicht auf ein Überdruckventil gemäß einem fünften Ausführungsbeispiel der Erfindung.

Bevorzugte Ausführungsformen der Erfindung

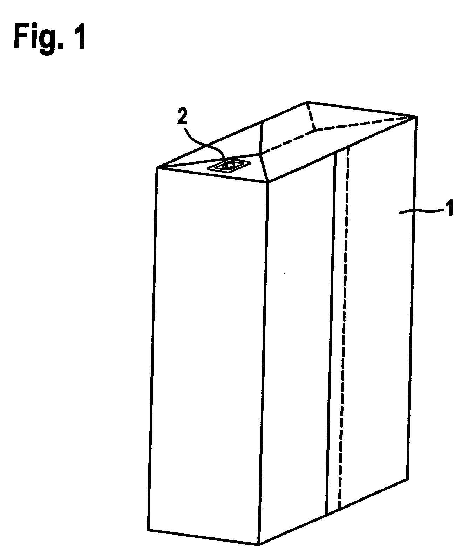

Nachfolgend wird unter Bezugnahme auf die Figuren 1 bis 3 ein Überdruckventil 2, gemäß einem ersten Ausführungsbeispiel der Erfindung, im Detail beschrieben.

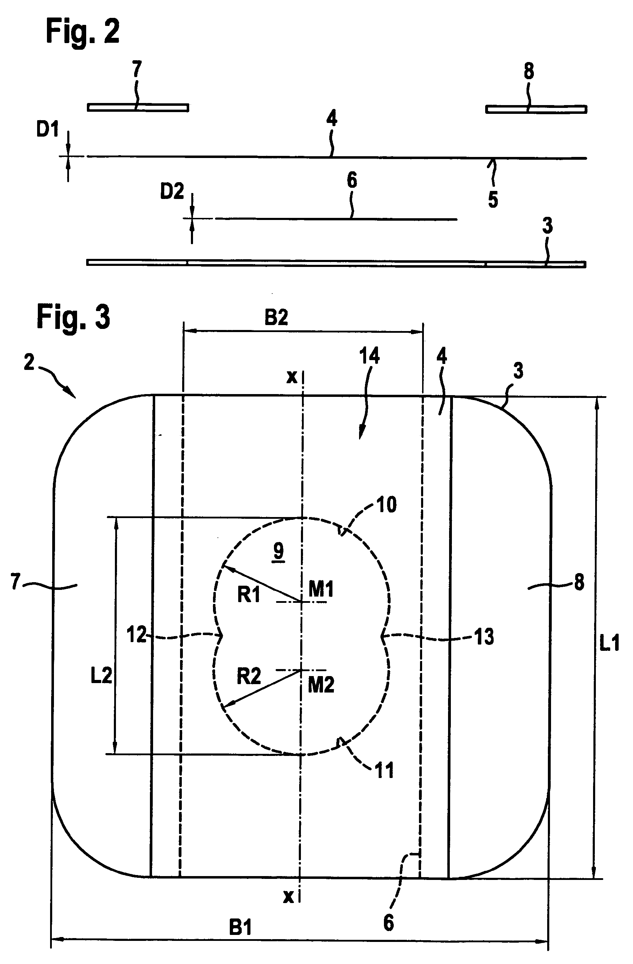

Wie aus den Figuren 2 und 3 ersichtlich ist, umfasst das Überdruckventil 2 eine Basisplatte 3, in welcher mittig eine Ventilöffnung 9 angeordnet ist. Die Basisplatte 3 weist eine quadratische Form mit abgerundeten Ecken auf. Das Überdruckventil 2 umfasst ferner eine Membran 4, eine Zwischenlage 6 und einen ersten und einen zweiten Abstandshalter 7, 8. An einer Seite der Membran 4 ist eine, die ganze Seite bedeckende, Klebstoffbeschichtung 5 aufgebracht. Die äußere Form der Membran 4 entspricht dabei der äußeren Form der Basisplatte 3. Die Zwischenlage 6 ist an der Klebstoffseite an die Membran 4 geklebt.

Dadurch ergeben sich an der Membran 4 zwei zueinander parallele Randzonen, mit welchen die Membran 4 auf die Basisplatte 3 geklebt wird. Dabei deckt die Zwischenlage 6 die Ventilöffnung 9 sowie einen in Längsrichtung des Überdruckventils liegenden Bereich an der Basisplatte 3 ab. Dieser Bereich wird auch als Kanalzone 14 bezeichnet. Die Kanalzone 14 weist dabei eine Länge L1 und eine Breite B2 auf, wobei die Länge L1 1,7 bis 2 mal so lang ist wie die Breite B2. Die Breite der Basisplatte 3 ist mit B1 bezeichnet, wobei B1 gleich L1 ist, da die Basisplatte quadratisch ist. Die Kanalzone 14 ist dabei in Richtung einer Längserstreckung der Ventilöffnung 9 vorgesehen und deckt die Ventilöffnung 9 vollständig ab.

Die Ventilöffnung 9 ist, wie aus Figur 3 ersichtlich, aus zwei sich schneidenden Kreisflächen 10, 11 gebildet. Die Mittelpunkte M1 und M2 der beiden Kreisflächen 10, 11 liegen dabei auf einer gemeinsamen Achse X-X, welche auch die Mittelachse des Überdruckventils 2 ist. An der Ventilöffnung 9 sind ferner eine erste Lochspitze 12 und eine zweite Lochspitze 13 gebildet. Die Lochspitzen sind dabei nach innen gerichtet, wobei die Lochspitzen 12, 13 in Längsrichtung des Überdruckventils in der Mitte des Überdruckventils angeordnet sind. Die beiden Kreisflächen 10, 11 weisen jeweils den gleichen Radius R1 bzw. R2 auf. Die Fläche der Ventilöffnung 9 beträgt ca. 23,28 mm².

Die Fläche der Zwischenlage 6 beträgt B2 x L1 = 78,13 mm². Somit beträgt das Verhältnis V der Fläche der Zwischenlage 6 zur Fläche der Ventilöffnung 9:

$$V = 78,13 : 23,28 = 3,36.$$

Das Überdruckventil 2 ist dabei sowohl symmetrisch zur Mittelachse X-X als auch zu einer anderen hierzu senkrechten Mittelachse ausgebildet. Die Bezugszeichen 7 und 8 bezeichnen dabei einen ersten und einen zweiten Abstandshalter, welche seitlich auf die Membran aufgeklebt sind. Die Abstandshalter 7, 8 stellen sicher, dass sich die Membran 4 im Bereich der Kanalzone 14 bei einem Überdruck im Inneren eines Verpackungsbehälters wölben kann.

Figur 1 zeigt ein Anwendungsbeispiel des erfindungsgemäßen Überdruckventils 2, welches bei einem Verpackungsbehälter 1 an einem Boden- bzw. Kopfbereich und im Seitenfaltenbereich von Kopf und Boden angeordnet ist. Dadurch sind sämtliche seitliche Bereiche ohne Rücksicht auf das Überdruckventil frei bedruckbar, so dass entsprechend Werbung usw. darauf gedruckt werden kann.

Es sei ferner angemerkt, dass die Zwischenlage 6 eine Dicke D2 aufweist, die größer ist als eine Dicke D1 der Membran 4. Durch Wahl der Dicke der Zwischenlage 6 kann dabei die Steifigkeit der Membran 4 und damit das Öffnungsverhalten des Überdruckventils 2 beeinflusst werden. Durch einfachen Austausch der Zwischenlage 6 gegen eine Zwischenlage mit einer anderen Dicke kann somit ein Öffnungsverhalten des Überdruckventils verändert werden. Dadurch kann auf einfache Weise ein modularer Aufbau erreicht werden und für verschiedene Einsatzzwecke von Überdruckventilen eine große Anzahl von Gleichteilen beibehalten werden, wobei lediglich verschiedene Zwischenlagen 6 vorgehalten werden müssen. Da die Zwischenlagen 6 einfach mittels Kleben an die Klebstoffbeschichtung der Membran 4 aufgebracht werden können, kann eine einfache und kostengünstige Herstellbarkeit des Überdruckventils 2 erreicht werden.

Durch die Wahl der Flächenverhältnisse V zwischen der Fläche der Zwischenlage 6 und der Fläche der Ventilöffnung 9 kann ferner eine Miniaturisierung der Abmessungen des Überdruckventils 2 ohne Einbußen beim Öffnungsverhalten erreicht werden. Eine Länge L1 sowie eine Breite B1 der Basisplatte 3 ist in diesem Ausführungsbeispiel 12,5 mm. Somit kann das erfindungsgemäße Überdruckventil problemlos an beliebigen Positionen eines Verpackungsbehälters unauffällig angeordnet werden.

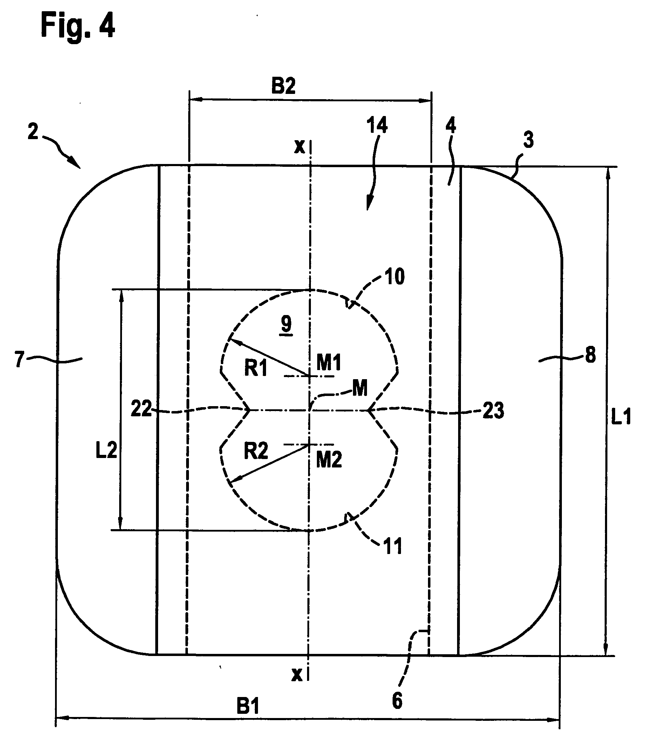

Nachfolgend wird unter Bezugnahme auf die Figur 4 ein Überdruckventil gemäß einem zweiten Ausführungsbeispiel der Erfindung im Detail beschrieben, wobei gleiche bzw. funktional gleiche Teile mit den gleichen Bezugszeichen wie im ersten Ausführungsbeispiel bezeichnet sind. Im Unterschied zum ersten Ausführungsbeispiel weist das zweite Ausführungsbeispiel eine erste Lochspitze 22 und eine zweite Lochspitze 23 auf, welche unterschiedlich gebildet sind als im ersten Ausführungsbeispiel. Beim zweiten Ausführungsbeispiel sind die Lochspitzen 22, 23 in einer Dreieckform ausgebildet. Dadurch erreichen die Lochspitzen weiter in Richtung eines Mittelpunkts M der Ventilöffnung 9. Durch diese Änderung wird ein schnelleres Öffnungsverhalten des Überdruckventils 2 erreicht, d.h. das Überdruckventil 2 des zweiten Ausführungsbeispiels öffnet schon bei einem geringeren Überdruck als das des ersten Ausführungsbeispiels. Ansonsten entspricht dieses Ausführungsbeispiel dem vorhergehenden Ausführungsbeispiel, so dass auf die dort gegebene Beschreibung verwiesen werden kann.

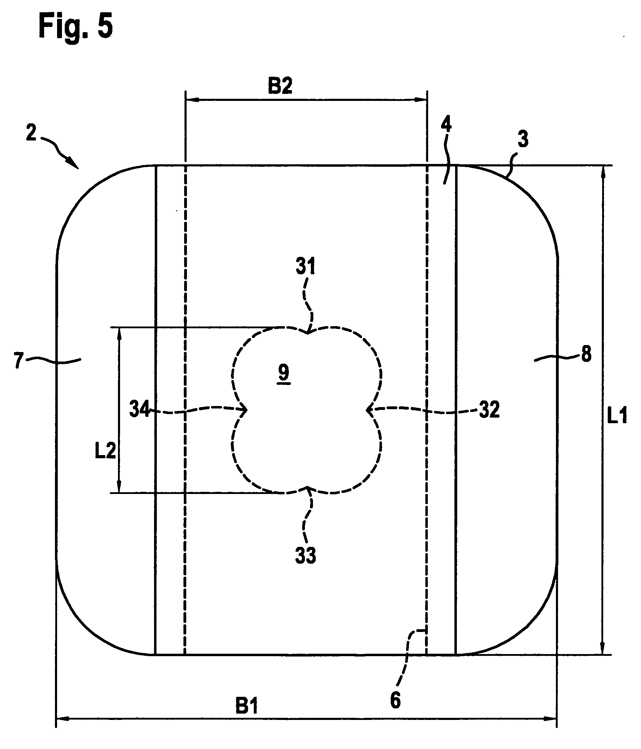

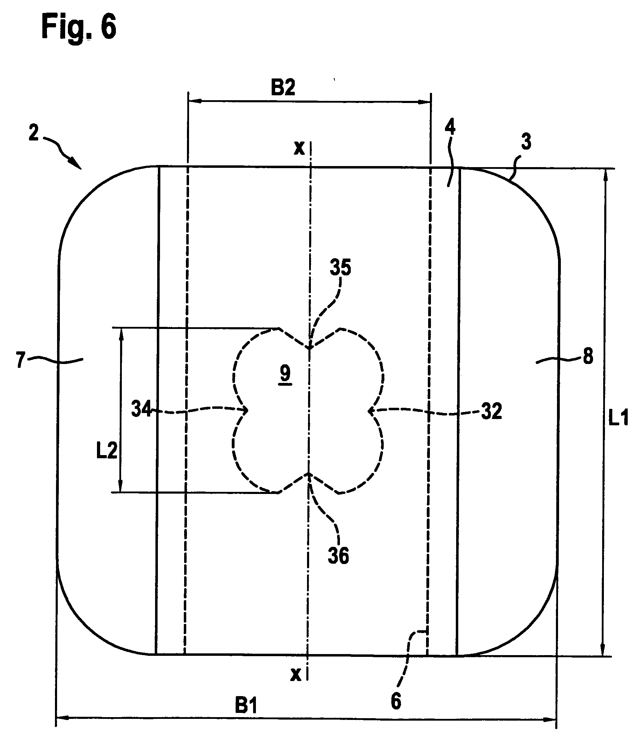

Die Figuren 5 und 6 zeigen ein drittes und viertes Ausführungsbeispiel der Erfindung. Hierbei ist die Ventilöffnung 9 durch vier sich einander schneidende Kreisflächen gebildet. Hierdurch ergeben sich vier Lochspitzen 31, 32, 33, 34. Das dritte Ausführungsbeispiel von Figur 5 weist dabei Lochspitzen auf, welche sich durch die sich schneidenden Kreisflächen ergeben. Das vierte Ausführungsbeispiel von Figur 6 weist dabei zwei Lochspitzen 35, 36 auf, die eine Dreieckform aufweisen.

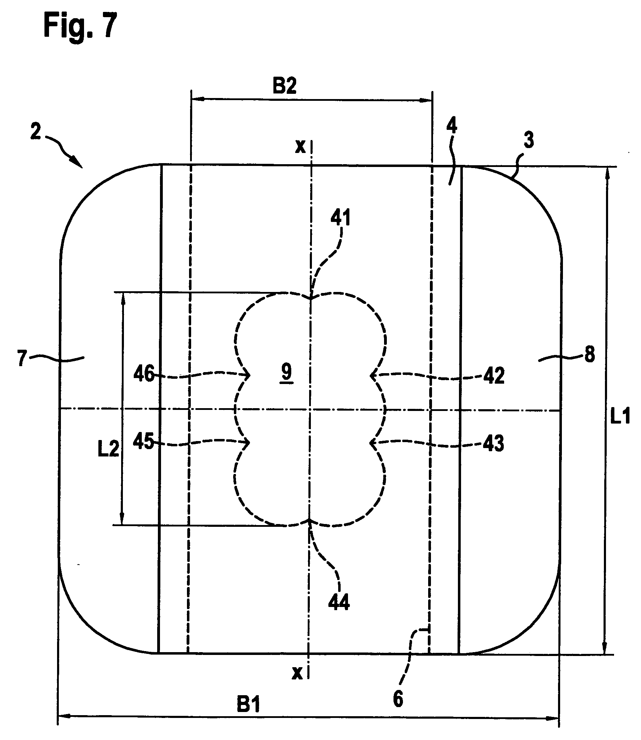

Figur 7 zeigt ein fünftes Ausführungsbeispiel der Erfindung, welches eine Ventilöffnung 9 aufweist, die aus sechs sich schneidenden Kreisflächen gebildet ist. Dadurch ergeben sich sechs Lochspitzen 41, 42, 43, 44, 45, 46. Durch diese sechs nach innen gerichteten Lochspitzen der Ventilöffnung 9 kann ein sehr empfindliches Überdruckventil 2 erhalten werden, welches schon bei geringen Überdrücken von wenigen Pascal öffnet. Ansonsten entspricht dieses Ausführungsbeispiel den vorhergehenden Ausführungsbeispielen, so dass auf die dort gegebene Beschreibung verwiesen werden kann.

## Patentansprüche

1.  Überdruckventil für einen Verpackungsbehälter, umfassend:

    - eine an einer Wand des Verpackungsbehälters befestigbare Basisplatte (3) mit einer Ventilöffnung (9),
    - eine Membran (4), welche an der Basisplatte (3) über der Ventilöffnung (9) angeordnet ist, wobei die Membran (4) an einer Seite einen Klebstoff aufweist, und
    - eine Zwischenlage (6), die derart an der Klebstoff aufweisenden Seite der Membran aufgeklebt ist, dass die Membran (4) zwei verbleibende, Klebstoff aufweisende parallele Randzonen zur Befestigung an der Basisplatte (3) aufweist,
    - wobei die Membran (4) mit der Zwischenlage (6) derart auf der Basisplatte angeordnet ist, dass eine Kanalzone (14) auf der Basisplatte (3) gebildet ist, welche die Ventilöffnung (9) überdeckt und in Schließlage auf der Basisplatte dicht aufliegt, **dadurch gekennzeichnet, dass** die Zwischenlage (6) eine Dicke (D2) aufweist, welche größer ist als die Dicke (D1) der Membran (4).

2. Überdruckventil nach Anspruch 1, **dadurch gekennzeichnet, dass** die Zwischenlage (6) mittig auf die Membran (4) aufgeklebt ist

3. Überdruckventil nach einem der vorhergehenden Ansprüche, **dadurch gekennzeichnet, dass** die Zwischenlage (6) eine Breite (B2) aufweist, welche ungefähr die Hälfte einer Länge (L1) der Zwischenlage (6) ist.

4. Überdruckventil nach einem der vorhergehenden Ansprüche, **dadurch gekennzeichnet, dass** ein Verhältnis (V) einer Fläche der Zwischenlage (6) zu einer Fläche der Ventilöffnung (9) die Gleichung

$$3 \leq V \leq 4$$

erfüllt, wobei V bevorzugt ca. 3,5 ist.

5. Überdruckventil nach einem der vorhergehenden Ansprüche, **dadurch gekennzeichnet, dass** die Ventilöffnung (9) eine Fläche aufweist, welche gleich oder kleiner als 30 mm$^2$ ist und insbesondere kleiner oder gleich 25 mm$^2$ ist.

6. Überdruckventil nach einem der vorhergehenden Ansprüche, **dadurch gekennzeichnet, dass** die Ventilöffnung (9) durch zwei sich schneidende Kreisflächen (10, 11), vorzugsweise mit gleichem Radius (R1, R2), gebildet ist.

7. Überdruckventil nach Anspruch 6, **dadurch gekennzeichnet, dass** eine Längserstreckung (L2) der Ventilöffnung (9) gleich der Hälfte einer Länge (L1) der Basisplatte (3) ist.

8. Überdruckventil nach einem der Ansprüche 1 bis 5, **dadurch gekennzeichnet, dass** die Ventilöffnung (9) durch drei oder vier oder sechs sich schneidende Kreisflächen gebildet ist

9. Überdruckventil nach einem der Ansprüche 6 bis 8, **dadurch gekennzeichnet, dass** die Ventilöffnung (9) Lochspitzen (22, 23; 35, 36) aufweist, welche eine Dreieckform aufweisen.

## Claims

1. Pressure-relief valve for a packaging container, comprising:

   - a base plate (3), which can be fastened on a wall of the packaging container and has a valve opening (9),
   - a membrane (4), which is arranged on the base plate (3), over the valve opening (9), wherein the membrane (4) has an adhesive on one side, and
   - an intermediate layer (6), which is adhesively bonded to the adhesive-containing side of the membrane such that the membrane (4) has two remaining, adhesive-containing, parallel peripheral zones for fastening on the base plate (3),
   - wherein the membrane (4), with the intermediate layer (6), is arranged on the base plate such that a channel zone (14) is formed on the base plate (3), said channel zone covering over the valve opening (9) and, in the closed position, resting in a sealed manner on the base plate, **characterized in that** the intermediate layer (6) has a thickness (D2) which is greater than the thickness (D1) of the membrane (4).

2. Pressure-relief valve according to Claim 1, **characterized in that** the intermediate layer (6) is adhesively bonded to the membrane (4) in the centre thereof.

3. Pressure-relief valve according to either of the preceding claims, **characterized in that** the intermediate layer (6) has a width (B2) which is approximately half the length (L1) of the intermediate layer (6).

4. Pressure-relief valve according to one of the preceding claims, **characterized in that** a ratio (V) of a surface area of the intermediate layer (6) to a surface area of the valve opening (9) satisfies the equation

$$3 \leq V \leq 4$$

where V is preferably approximately 3.5.

5. Pressure-relief valve according to one of the preceding claims, **characterized in that** the valve opening (9) has a surface area which is equal to, or smaller than, 30 mm$^2$ and in particular smaller than, or equal to, 25 mm$^2$.

6. Pressure-relief valve according to one of the preceding claims, **characterized in that** the valve opening (9) is formed by two intersecting circular surface areas (10, 11), preferably of the same radius (R1, R2).

7. Pressure-relief valve according to Claim 6, **characterized in that** a longitudinal extent (L2) of the valve opening (9) is equal to half the length (L1) of the base plate (3).

**8.** Pressure-relief valve according to one of Claims 1 to 5, **characterized in that** the valve opening (9) is formed by three or four or six intersecting circular surface areas.

**9.** Pressure-relief valve according to one of Claims 6 to 8, **characterized in that** the valve opening (9) has hole peaks (22, 23; 35, 36) of triangular shape.


**Revendications**

**1.** Valve de surpression pour un récipient d'emballage, comprenant :

- une plaque de base (3) pouvant être fixée à une paroi du récipient d'emballage avec une ouverture de valve (9),
- une membrane (4) qui est disposée au niveau de la plaque de base (3) au-dessus de l'ouverture de valve (9), la membrane (4) présentant un adhésif sur un côté et
- une couche intermédiaire (6) qui est collée au côté de la membrane présentant de l'adhésif de telle sorte que la membrane (4) présente deux zones de bord parallèles restantes présentant de l'adhésif pour la fixation à la plaque de base (3),
- la membrane (4) étant disposée avec la couche intermédiaire (6) sur la plaque de base de telle sorte qu'une zone de canal (14) soit formée sur la plaque de base (3), laquelle recouvre l'ouverture de valve (9) et, dans la position de fermeture, s'applique, hermétiquement sur la plaque de base, **caractérisée en ce que** la couche intermédiaire (6) présente une épaisseur (D2) qui est supérieure à l'épaisseur (D1) de la membrane (4).

**2.** Valve de surpression selon la revendication 1, **caractérisée en ce que** la couche intermédiaire (6) est collée centralement sur la membrane (4).

**3.** Valve de surpression selon l'une quelconque des revendications précédentes, **caractérisée en ce que** la couche intermédiaire (6) présente une largeur (B2) qui est approximativement la moitié d'une longueur (L1) de la couche intermédiaire (6).

**4.** Valve de surpression selon l'une quelconque des revendications précédentes, **caractérisée en ce qu'**un rapport (V) d'une surface de la couche intermédiaire (6) à une surface de l'ouverture de soupape (9) satisfait à la relation

$$3 \leq V \leq 4$$

V valant de préférence environ 3,5.

**5.** Valve de surpression selon l'une quelconque des revendications précédentes, **caractérisée en ce que** l'ouverture de valve (9) présente une surface inférieure ou égale à 30 mm² et notamment inférieure ou égale à 25 mm².

**6.** Valve de surpression selon l'une quelconque des revendications précédentes, **caractérisée en ce que** l'ouverture de valve (9) est formée par deux surfaces circulaires s'intersectant (10, 11), de préférence de même rayon (RI, R2).

**7.** Valve de surpression selon la revendication 6, **caractérisée en ce qu'**une étendue longitudinale (L2) de l'ouverture de valve (9) est égale à la moitié d'une longueur (L1) de la plaque de base (3).

**8.** Valve de surpression selon l'une quelconque des revendications 1 à 5, **caractérisée en ce que** l'ouverture de valve (9) est formée par trois ou quatre ou six surfaces circulaires s'intersectant.

**9.** Valve de surpression selon l'une quelconque des revendications 6 à 8, **caractérisée en ce que** l'ouverture de valve (9) présente des pointes de trou (22, 23 ; 35, 36) qui présentent une forme circulaire.

**Fig. 1**

# Fig. 2

# Fig. 3

# Fig. 4

# Fig. 5

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0760790 B1
- DE 4435492 A1